# FASCICULE DE BREVET EUROPEEN

(11) **EP 0 571 847 B1**
(45) Date de publication et mention de la délivrance du brevet: **16.09.1998**
(21) Numéro de dépôt: 93107924.8
(22) Date de dépôt: 14.05.1993
(51) Int. Cl.: H04Q 7/18, G08B 3/10

(54) **Récepteur d'appel local à faible consommation d'énergie**
Rufempfänger mit geringem Energieverbrauch
Pager with low power consumption

(30) Priorité: 27.05.1992 CH 1718/92
(43) Date de publication de la demande: 01.12.1993
(73) Titulaire: Eta SA Fabriques d'Ebauches, 2540 Granges (CH)
(72) Inventeur: Pache, Rémy, CH-1025 St-Sulpice (CH)
(74) Mandataire: de Montmollin, Henri

(56) Documents cités:
- EP-A- 413 369
- WO-A-90/06566
- WO-A-90/06634

## Description

La présente invention concerne les systèmes d'appel local et, plus particulièrement, l'alimentation des récepteurs d'appel local utilisés dans de tel systèmes. Dans la suite de la présente description, on désignera par le mot "pager" de tels récepteurs d'appel local, car ce terme est maintenant très largement admis et utilisé dans les pays francophones, tant par les spécialistes que par le grand public qui en est l'utilisateur.

La présente invention peut être utilisée dans des pagers portables capables de recevoir des signaux de message émis à haute fréquence, l'invention étant décrite ci-après en relation avec cet exemple d'application auquel elle n'est toutefois pas limitée.

Les systèmes de télécommunication en général, et les systèmes d'appel local en particulier, utilisant des signaux de message radiodiffusés sont à l'heure actuelle largement employés pour assurer l'appel de pagers dans un but de leur envoyer sélectivement de l'information à partir d'une station centrale. Cette information est transmise au moyen de schémas de codage et de formats de message déterminés, tels que ceux connus sous le vocable POGSAG ou GOLAY. Pour ce qui concerne le schéma POGSAG, on peut se référer notamment à la recommandation du CCIR 584-1, Dubrovnik, 1986.

L'un des problèmes majeurs que l'on rencontre dans le développement et la commercialisation des pagers concerne l'alimentation en énergie et, plus particulièrement lorsque le pager est portable, son autonomie de fonctionnement compte tenu de la capacité de stockage d'énergie de la source d'énergie qui est incorporée dans le pager.

Par exemple, il existe à l'heure actuelle sur le marché des pagers réalisés sous la forme d'une pièce d'horlogerie qui outre d'assurer les fonction d'un pager est dotée également de possibilités d'indiquer l'heure et d'autres fonctions horaire telles que l'indication d'un temps chronométré, du quantième et du jour de la semaine. Dans de tels dispositifs qui se portent de préférence comme une montre-bracelet, la taille de la source d'énergie est naturellement excessivement importante. Plus cette taille est petite, et plus on peut réduire les dimensions de la pièce d'horlogerie et, partant, obtenir plus de facilités pour concevoir une pièce ayant un esthétique agréable, condition essentielle pour rendre la pièce commercialisable à grande échelle.

Jusqu'ici, les constructeurs des pagers connus n'ont que très partiellement atteint cet objectif de très faible consommation. Par conséquent, ils ont l'habitude de doter les pagers d'une source d'énergie assez volumineuse, pour atteindre un compromis entre une autonomie acceptable et une taille compatible avec un maniement commode et un transport quotidien sur soi par l'utilisateur. Si un bon compromis de ce genre est relativement facilement atteignable, pour un pager porté dans une poche de vêtement, par exemple, il n'en va pas de même lorsqu'il faut loger à la fois un pager, une pièce d'horlogerie et une source d'énergie dans un volume aussi petit que celui d'une montre portée au poignet. Les pagers déjà mis sur le marché de cette nature, ont bien le volume requis, encore que leur esthétique laisse souvent à désirer, mais en contrepartie ils ont une autonomie relativement faible. Ainsi, il existe des montres-pagers dans lesquels pour pouvoir loger une pile de taille suffisante, on prévoit sur le boîtier un volume qui déborde latéralement du périmètre couvert par le cadran ou plus généralement du dispositif d'affichage. Cette protubérance nuit bien évidemment à l'esthétique de l'ensemble de sorte que dans une telle réalisation un bon compromis entre autonomie et volume (ou esthétique) n'est pas atteint.

Les spécialistes du domaine des pagers savent que le plus gros consommateur d'énergie dans le pager est le récepteur chargé, à partir de l'antenne, de recevoir la porteuse modulée envoyée par la station centrale et de démoduler cette porteuse pour en extraire le signal binaire utile. Diverses propositions ont donc été faites dans le passé pour éviter que le récepteur fonctionne pendant tout le temps que l'utilisateur maintient le pager enclenché ou sous alimentation.

Certaines de ses propositions prévoient simplement de doter le pager d'un circuit de temporisation capable de couper l'alimentation du pager de façon autoritaire, par exemple la nuit, lorsque l'utilisateur n'ayant alors pas besoin du pager, a oublié de le mettre hors circuit. Cette solution n'est pas satisfaisante, à elle seule pour atteindre une très faible consommation.

D'autres solutions plus sophistiquées, consistent à rendre les périodes de coupure du pager fonction de la forme ou de la nature du signal reçu. Une telle solution est décrite par exemple dans le brevet US 4 370 753 dans le cadre de signaux de message radiodiffusés comportant un préambule suivi d'un certain nombre de messages représentant l'information à transmettre. Dans ce cas, un circuit de commande branche périodiquement la source d'énergie au récepteur pour qu'un détecteur de fréquence puisse reconnaître dans le préambule du signal reçu un code séquentiel propre au pager considéré et ce, selon un protocole particulier faisant intervenir une reconnaissance redondante. Une fois le code reconnu, le récepteur est mis sous tension pendant une durée prolongée pouvant couvrir la durée de plusieurs messages consécutifs contenus dans le signal reçu. Cette solution permet effectivement de ne mettre le récepteur en marche que pendant des périodes réduites et on arrive donc à économiser de l'énergie consommée par le pager. Cependant, le récepteur reste sous tension pendant de longues périodes et ne tient pas compte du fait que le signal radiodiffusé contient une grande quantité d'information qui n'est pas utile pour un pager considéré mais s'adresse en fait aux autres pagers faisant partie de ceux auquel est envoyé le signal radiodiffusé. Par ailleurs, dans certains conditions de fonctionnement, un pager n'a généralement pas besoin de traiter tout le contenu de l'information qui lui parvient, même si elle lui est destinée plus spécifiquement, par exemple pour lui permettre de se synchroniser sur le rythme de l'émetteur de signal radiodiffusé.

Une autre solution est décrite dans le brevet EP 0 118 153. Dans ce cas, il s'agit d'un pager spécialement destiné à travailler avec le format POGSAG. Le circuit de ce pager permet également de couper l'alimentation du récepteur dans certaines conditions de fonctionnement comme le permet le format POGSAG. Plus précisément, en supposant que le pager a déjà assuré sa synchronisation avec les bits du signal de message reçu et également avec les groupes de mots-code de synchronisation et de message (adresses et information de message), un circuit de commande d'alimentation autorise l'alimentation du récepteur pendant la durée de chaque mot-code de synchronisation et chaque trame du signal qui est allouée à ce pager dans un groupe de mots-code de message. Ce circuit permet ainsi d'obtenir une meilleure économie d'énergie qu'avec le pager du brevet américain précité.

Cependant, la reconnaissance des mots-code de synchronisation ou d'adresse ne peut se faire qu'après la réception de l'ensemble de ses mots, procédure pour laquelle tous les bits de ces mots doivent nécessairement être contrôlés dans leur ensemble et soumis à une analyse d'erreur. Il en résulte qu'un tel pager présente encore une consommation en énergie relativement élevée compte tenu du fait qu'un groupe de mots-code dans le format POGSAG se présente chaque seconde pendant l'émission d'un paquet de données par l'émetteur central, opération qui est lui-même répétée toutes les une à deux minutes.

L'invention est basée sur la constatation que les périodes d'alimentation du récepteur d'un pager peuvent encore davantage être réduites sans nuire, ni à une bonne synchronisation, ni à une bonne analyse de l'information de message destinée au pager considérée.

L'invention a pour but de créer un pager dans lequel le récepteur n'est alimenté que pendant le temps strictement nécessaire pour permettre l'interprétation correcte de l'information qui lui est destinée c'est-à-dire sans altérer le taux d'appel réussi (succes call rate), ce pager permettant ainsi d'obtenir un bon compromis entre son autonomie et ses dimensions générales.

L'invention a également pour but de créer un pager pouvant être réalisé avantageusement, bien que non exclusivement, sous la forme d'une montre-bracelet capable, outre d'offrir les fonctions de pager, de réaliser une ou plusieurs fonctions horaires telles que l'indication de l'heure normale, le quantième et la date, par exemple.

L'invention a donc pour objet un pager destiné à la reception de signaux de message radiodiffusés composés d'un mot-code de synchronisation répété à intervalles réguliers, de mots-code d'adresse et de mots-code d'information de message, ladite information de message comprenant un ou plusieurs messages, le pager comprenant:
un récepteur pour recevoir et démoduler lesdits signaux codés,
un décodeur destiné à décoder lesdits signaux de message codés pour discriminer lesdits mots-code de synchronisation, d'adresse et d'information de message et pour, s'il s'avère que ledit pager est adressé, extraire l'information de message qui lui est destinée,
un dispositif de mémoire connecté audit décodeur et destiné à mémoriser ladite information de message,
un dispositif connecté audit dispositif de mémoire pour traiter ladite information de message afin de la rendre intelligible,
des moyens d'alimentation pour alimenter ledit pager,
des moyens de commutation connectés entre ledit récepteur et lesdits moyens d'alimentation pour appliquer sélectivement à ce récepteur la tension d'alimentation fournie par lesdits moyens d'alimentation,
des moyens pour mémoriser ledit mot-code de synchronisation, et
des moyens de commande pour commander lesdits moyens de commutation du récepteur de manière à lui appliquer ladite tension pour permettre la réception du mot-code de synchronisation et opérer une comparaison entre ledit mot-code de synchronisation mémorisé et le mot-code de synchronisation dudit signal de message, lesdits moyens de commande étant agencés pour couper ladite tension après la reconnaissance du mot-code de synchronisation,
caractérisé en ce que
lesdits moyens de commande comprennent des moyens pour effectuer ladite comparaison bit par bit sur une partie au moins des bits du mot-code de synchronisation qui présente le plus grand nombre de changement d'état entre bits successifs et pour permettre l'actionnement desdits moyens de commutation afin de couper ladite tension d'alimentation fournie audit récepteur lorsque la comparaison indique la reconnaissance du mot-code de synchronisation, par identité d'un nombre limité de bits seulement de ce mot.

Grâce à ces caractéristiques, le récepteur du pager n'est alimenté que pendant des durées minimales strictement nécessaires pour qu'une reconnaissance efficace et sûre du mot-code de synchronisation puisse être effectuée. Il en résulte une consommation en énergie minimale du pager et, par voie de conséquence, une autonomie meilleure du pager qu'il n'était possible d'obtenir avec les pagers selon la technique classique.

L'invention a également pour objet un pager du type défini ci-dessus et dans lequel lesdits moyens de commande comportent également des moyens pour mémoriser un mot-code d'adresse caractéristique dudit pager et des moyens pour effectuer une comparaison bit par bit sur une partie au moins des bits de ce mot-code d'adresse mémorisé, avec les bits correspondants de mots-code d'adresse contenus dans le signal de message entrant, et pour actionner lesdits moyens de commutation de manière qu'ils maintiennent l'alimentation dudit récepteur seulement si ladite comparaison d'adresse indique un nombre d'inégalités de bits inférieur à un nombre prédéterminé.

Grâce à cette caractéristique complémentaire de l'invention, une économie d'énergie peut également être réalisée sur la reconnaissance de l'adresse qui, dans le signal de message entrant indique qu'un message destiné au pager considéré est présent, le récepteur de ce pager fonctionnant également pendant un minimum de temps pendant le processus de reconnaissance.

D'autres caractéristiques et avantages de l'invention apparaîtront au cours de la description qui va suivre, donnée uniquement à titre d'exemple et faite en se référant aux dessins annexés sur lesquels:
- la figure 1 est un schéma simplifié d'un mode de réalisation d'un pager suivant l'invention;
- les figures 2A à 2C montrent un diagramme représentant le schéma de codage POGSAG pouvant être utilisé pour la transmission de l'information de message destinée au pager de la figure 1;
- la figure 3 est un schéma plus détaillé du pager suivant l'invention;
- la figure 4 est un schéma simplifié d'un décodeur utilisé dans le pager de la figure 3, la figure illustrant plus particulièrement comment les principes de l'invention peuvent être mis en oeuvre;
- les figures 5, 6A, 6B et 7 sont des organigrammes illustrant le processus de reconnaisance du mot-code de synchronisation dans le pager suivant l'invention; et
- la figure 8 est un organigramme illustrant le processus de reconnaissance du mot-code d'adsesse dans le pager suivant l'invention.

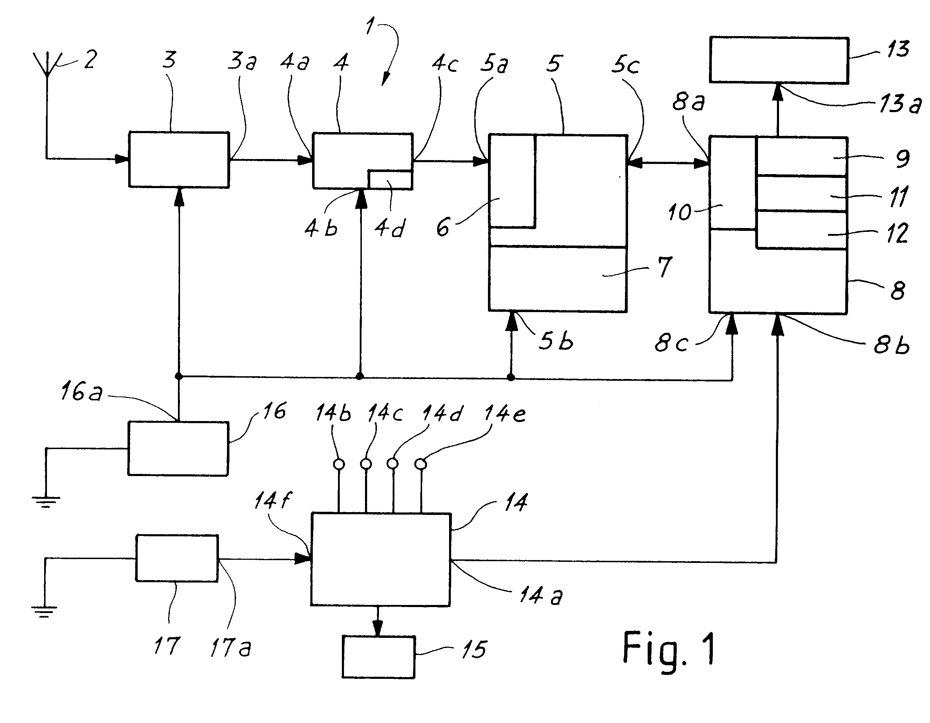

En se référant maintenant à la figure 1 des dessins annexés, on a représenté un schéma simplifié d'un pager 1 construit à titre d'exemple selon la présente invention. Ce pager 1 comprend une antenne 2 à laquelle est raccordé un récepteur 3 destiné à recevoir les signaux de message codés diffusés par une station centrale ou par une autre source à partir de laquelle on souhaite appeler l'utilisateur du pager 1. Les signaux de message codés diffusés peuvent comprendre, d'une part, de l'information de signalisation d'appel sélectif pour identifier un pager particulier parmi plusieurs ou un grand nombre de pagers conforme à la figure 1 et, d'autre part, de l'information de message particulière, les signaux pouvant être codés selon le format POGSAG ou tout autre format de codage approprié. Les signaux de message codés transmis reçus sur l'antenne 2 sont démodulés par le récepteur 3 et un paquet de données binaires en série représentant ces signaux de message codés est fourni à une sortie 3a du récepteur 3.

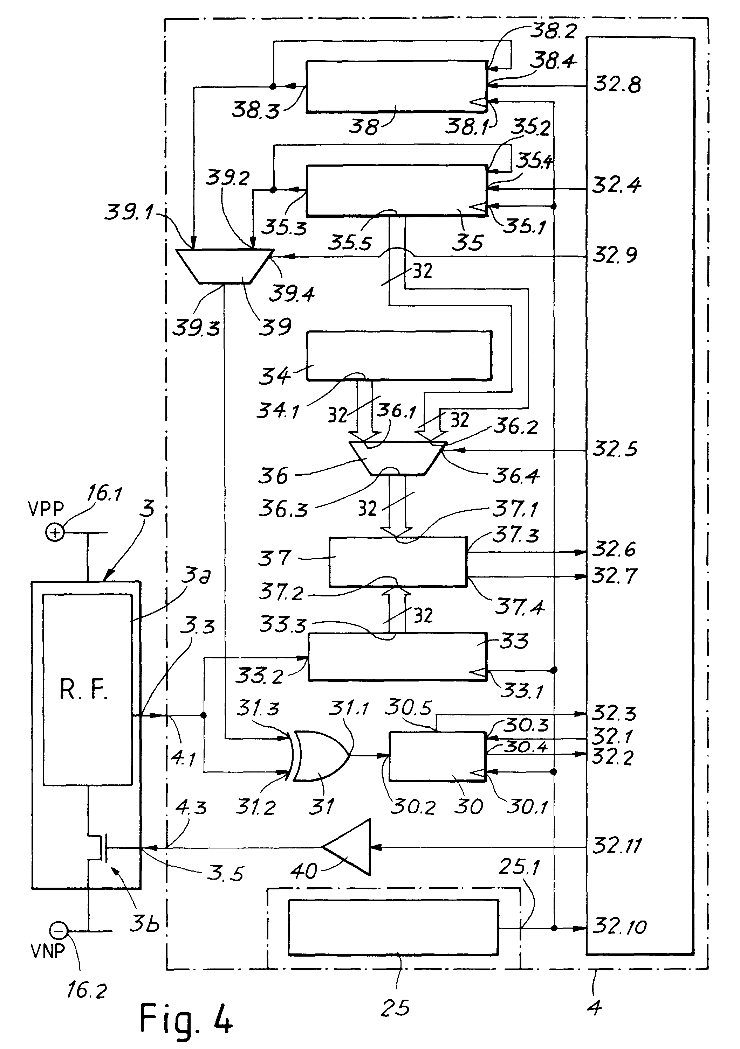

Le pager 1 comprend également un décodeur 4 connecté à la sortie 3a du récepteur 3 par son entrée 4a. Le décodeur 4 qui sera décrit plus loin en détail en faisant référence à la figure 4, comprend notamment une zone de mémoire 4d destinée à la mémorisation d'une information d'adresse prédéterminée à laquelle répondra le pager 1 considéré. Le décodeur 4 est adapté pour effectuer une comparaison entre les signaux de message codés reçus à l'entrée 4a et l'information d'adresse prédéterminée mémorisée dans la zone de mémoire 4d. Si l'information de signalisation d'appel sélectif correspond à l'une des adresses mémorisées, le décodeur fournit l'information de message proprement dite associée aux signaux de message codés, à la sortie 4c du décodeur.

Le pager 1 comprend également un dispositif de mémoire RAM 5 connecté à la sortie 4c du décodeur 4 par son entrée 5a. Ce dispositif 5 comprend une unité 6 de traitement de données et une zone de mémoire 7 et il est adapté pour recevoir des signaux de message codés sur son entrée 5a et à mémoriser ces signaux de message dans la zone de mémoire 7. L'unité 6 de traitement de données est adaptée pour commander la manière selon laquelle ces signaux de message sont mémorisés dans la zone de mémoire 7 et peuvent en être extraits; elle peut également accomplir des manipulations sur des signaux de message, des adresses, des pointeurs et d'autres variables internes. Le fonctionnement détaillé du dispositif de mémoire RAM 5 est décrit dans la demande de brevet déposée ce même jour par la Demanderesse et intitulée "Récepteur d'appel local".

Le pager 1 comprend également un micro-ordinateur 8 connecté à la sortie 5c de la mémoire RAM 5 par son entrée 8a. Le micro-ordinateur 8 comprend, d'une façon connue en soi, une interface d'affichage 9, un microprocesseur 10, une mémoire 11 à accès aléatoire (RAM) et une zone 12 de mémoire morte (ROM). L' interface d' affichage est conçue pour afficher de l'information de message choisie en commandant un affichage 13 par l'intermédiaire d'une entrée 13a et elle comprend un circuit d'attaque série et des circuits d'attaque série multiplexés pour une cellule d'affichage à cristaux liquides. Celle-ci est adaptée pour afficher de l'information de message mémorisée dans la zone de mémoire 7 de la mémoire RAM 5 et elle peut également être adaptée pour afficher l'heure ou d'autres informations.

La zone ROM 12 contient par construction des instructions pour commander le fonctionnement du microprocesseur 10, par exemple un programme pour l'affichage de signes correspondant à l'information de message mémorisée dans la zone de mémoire 7, pour commander les fonctions d'entrée et de sortie du micro-ordinateur 8, pour fournir des signaux de commande destinés à la mémoire RAM 5 et au décodeur 4, et pour commander la base de temps du micro-ordinateur 8. La zone RAM 11 est utilisée pour la mémorisation temporaire de données dans le micro-ordinateur 8 et constitue, parmi d'autres fonctions, un tampon de données pour l'information de message fournie par la mémoire RAM 5 et devant être affichée.

Le pager 1 comprend également un circuit 14 d'entrées de commande pour appliquer, par une sortie 14a des données à une entrée 8b du micro-ordinateur 8, ces données représentant de l'information d'entrée fournie par l'utilisateur. Des entrées d'utilisateur 14b,c,d et e sont connectées au circuit 14 d'entrées de commande, ces entrées pouvant se présenter sous la forme de boutons-poussoirs, de boutons rotatifs ou d'autres organes de commande permettant à l'utilisateur de commander certains fonctions du pager 1. Le circuit 14 d'entrées de commande peut également être adapté pour commander d'autres dispositifs associés au pager 1. Par exemple, une pièce d'horlogerie telle qu'une montre-bracelet peut être combinée au pager 1 et les entrées d'utilisateur 14b,c,d et e peuvent être utilisées pour assurer certaines commandes de tels dispositifs associés. De plus, le circuit 14 d'entrées de commande peut commander directement certaines fonctions de la pièce d'horlogerie associée au pager 1, comme par exemple celle de fournir le courant pour exciter le moteur 15 d'un mouvement électronique d'horlogerie.

Une alimentation portable 16 telle qu'une pile est également prévue dans le pager 1 pour fournir par l'intermédiaire de la sortie 16a, de l'énergie au récepteur 3, à l'entrée 4b du décodeur 4, à l'entrée 5b de la mémoire RAM 5 et à l'entrée 8c du micro-ordinateur 8. Une autre alimentation portable 17 munie d'une sortie 17a est prévue pour fournir de l'énergie au circuit 14 d'entrées de commande par l'entrée 14f. L'agencement que l'on vient de décrire fournit de l'énergie provenant de sources séparées respectivement au pager et à ses dispositifs associés, tels qu'une pièce d'horlogerie, de telle sorte que si, par exemple, la pile du pager venait à s'épuiser, la pièce d'horlogerie puisse continuer à fonctionner. Cependant, on comprend que le pager et ses dispositifs associés peuvent tout aussi bien être alimentés par une seule source d'énergie.

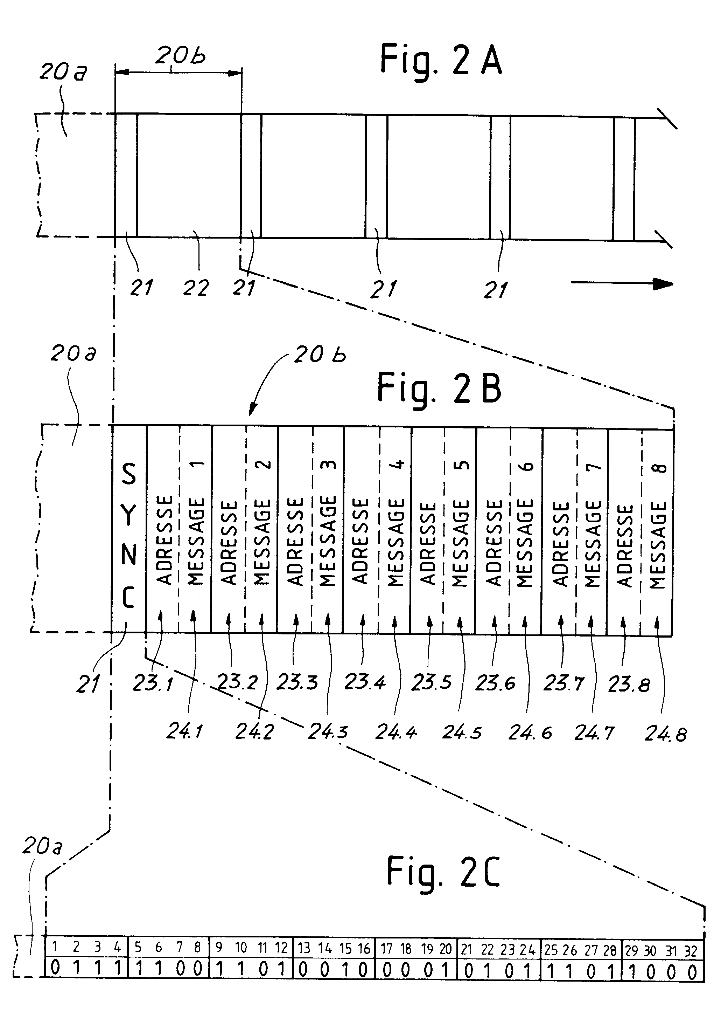

Un exemple d'information de message et de schéma de codage de pager utilisés pour diffuser des signaux de message tels que ceux utilisés par le pager 1, sont représentés sur les figures 2A à 2C. Le système POGSAG, bien connu des spécialistes de cette technique, utilise un format de codage numérique (figure 2A) composé d'un préambule 20a et de plusieurs groupes de mots-code 20b, eux-mêmes composés chacun d'un mot-code de synchronisation 21 et d'un groupe 22 de huit trames de deux mots-code chacune, ces groupes de mots-code étant transmis sous un format série à des intervalles réguliers, précédés par le préambule 20a. Ce dernier comporte une suite d'au moins 576 bits alternativement constitués par un "1" et un "0". Les mots-code ont chacun une longueur de 32 bits.

Chaque groupe 22 de huit trames est transmis à la suite d'un mot-code de synchronisation 21, les huit trames distinctes pouvant contenir, soit de l'information d'adresse, soit de l'information de message. Pour les besoins de l'explication, la figure 2B montre que chaque trame comporte un mot-code d'adresse, 23.1 à 23.8 respectivement, et un mot-code de message, 24.1 à 24.8 respectivement, mais cette configuration n'a été choisie qu'à titre d'exemple, car les mots-code contenant de l'information de message peuvent se suivre immédiatement sans interposition d'un mot-code d'adresse, si le message destiné au pager ayant ce mot-code d'adresse doit recevoir un message s'étendant sur plusieurs trames, par exemple.

Ainsi, dans l'exemple représenté à la figure 2B, chaque pager d'un groupe composé de pagers conformes à celui représenté à la figure 1, doit fonctionner sur l'une des huit mots-code d'adresse de telle sorte que chacun de ces mots représente de l'information de signalisation à l'aide de laquelle chaque pager du groupe est respectivement identifié. Dans le format POGSAG, chaque pager est affecté d'une adresse se trouvant toujours dans la même trame du groupe de mots-code.

La figure 2C montre la composition de chaque mot-code de synchronisation dont le contenu est identique dans tout le signal de message établi selon la norme POGSAG. Ce mot-code de synchronisation comporte 32 bits ayant les valeurs binaires indiquées sur la figure 2C.

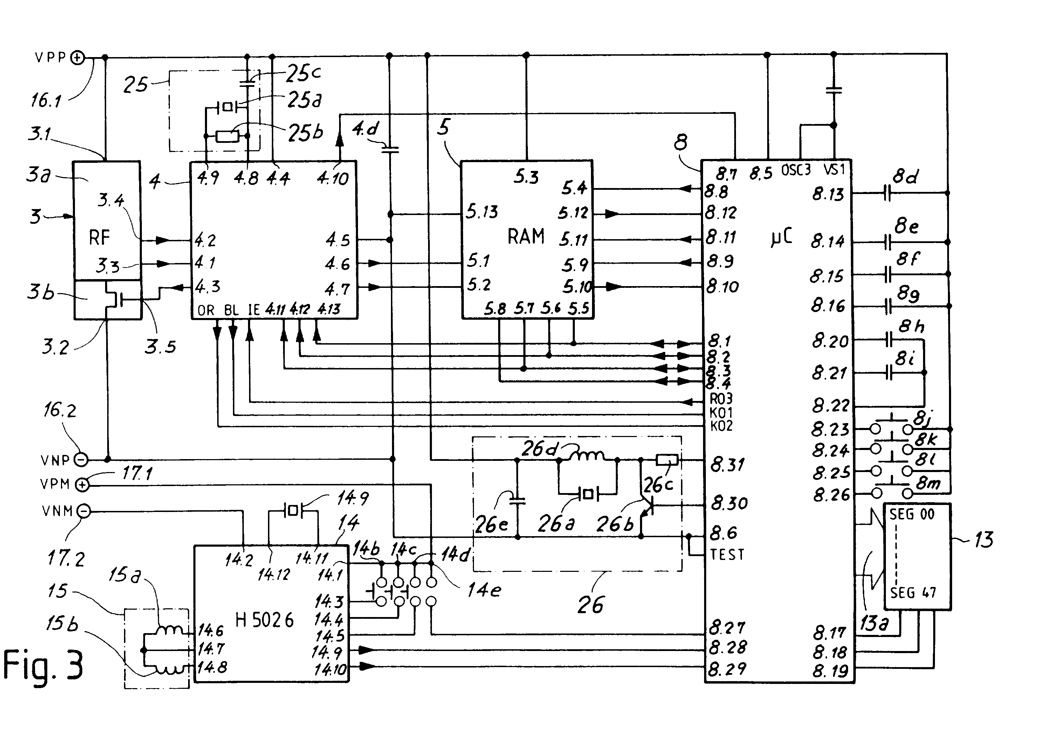

L'invention sera mieux comprise en référence à la figure 3 qui montre un schéma plus détaillé d'un mode de réalisation préféré du pager 1 selon l'invention. Comme déjà décrit ci-dessus, le pager 1 comprend essentiellement une antenne (non représentée sur la figure 3), le récepteur 3, le décodeur 4, la mémoire RAM 5 et le micro-ordinateur 8. Le circuit 14 d'entrées de commande destiné à la commande d'une pièce d'horlogerie 15 associée au pager est également représenté sur la figure 3.

Le récepteur 3 est connecté par sa borne 3.1 à un conducteur d'alimentation positive 16.1 de l'alimentation en énergie portable 16 (non représentée à la figure 3), sa borne 3.2 étant connectée à un conducteur d'alimentation négative 16.2 de l'alimentation 16. Le récepteur 3 comporte une partie 3a assurant la réception et la démodulation du signal de message reçu sur l'antenne 2, et une partie 3b qui constitue des moyens interrupteurs sélectifs raccordés entre la borne 3.2 et la partie 3a de réception. De cette manière, l'alimentation de cette partie de réception et de démodulation 3a peut être sélectivement établie ou coupée en fonction d'un signal de commande appliqué à une entrée 3.5 de la partie 3b du récepteur.

De façon connue en soi, les signaux de message codés radiodiffusés sont captés et démodulés par le récepteur 3 et l'antenne à laquelle celui-ci est connecté, de sorte que des paquets de données binaires tels que ceux représentés sur la figure 2A, sont engendrés à la sortie 3.3 du récepteur 3 et transmis à l'entrée 4.1 du décodeur 4. Le récepteur 3 comporte dans son circuit interne un montage (non représenté sur les figures et connu en soi) de surveillance de la tension de la source d'énergie 16, ce montage fournissant un signal d'indication d'épuisement de cette source sur la sortie 3.4 du récepteur 3. La sortie 3.4 transmet, le cas échéant, le signal d'indication d'épuisement aux autres circuits du pager 1, pour qu'un affichage lisible par l'utilisateur puisse en être assuré sur l'affichage 13.

Le décodeur 4 est connecté au conducteur d'alimentation positive 16.1 par sa borne 4.4 et au conducteur d'alimentation négative 16.2 par sa borne 4.5. Un condensateur 4d de stabilisation de tension est connecté entre les bornes 4.4 et 4.5. Le décodeur sera décrit plus loin en détail à propos de la figure 4. Il a notamment pour tâche de séparer l'information de signalisation d'appel sélectif de l'information de message proprement dite dans les signaux de message codés, et de comparer l'information de signalisation avec l'information d'adresse prédéterminée mémorisée dans le décodeur et propre au pager considéré.

Si l'information de signalisation d'appel sélectif correspond à l'une des adresses mémorisées, tout mot-code de message suivant le code d'adresse considéré jusqu'au mot-code d'adresse suivant est transmis sous forme de données en série, de la sortie 4.6 à l'entrée 5.1 de la mémoire RAM 5.

La sortie 4.7 du décodeur 4 fournit un signal de transfert de données pour permettre la lecture par la mémoire RAM 5 des données se présentant sur la sortie 4.6, ce signal pouvant prendre un niveau haut ou un niveau bas à l'entrée 5.2 de la mémoire RAM 5. L'information de message fournie à la sortie 4.6 est introduite dans la zone de mémoire 7 de la mémoire RAM 5, lorsqu'un multiplet de données complet a été transféré du récepteur 3 au décodeur 4.

Un circuit résonateur 25 est connecté au décodeur 4 par l'intermédiaire des entrées 4.8 et 4.9 de ce dernier. Il comprend essentiellement un résonateur à quartz 25a connecté en parallèle à une résistance d'amortissement 25b et aux entrées 4.8 et 4.9. Le conducteur d'alimentation positive 16.1 est connecté à l'une des bornes du résonateur à quartz 25a par l'intermédiaire d'un condensateur de résonance 25c. Le circuit résonateur coopère avec le circuit interne du décodeur 4 pour former un circuit oscillateur qui fournit une forme d'onde périodique de 32 kHz, par exemple au décodeur 4 pour déterminer la cadence de transmission des signaux de message du récepteur 3 vers le décodeur 4 (voir plus loin à propos de la figure 4). La forme d'onde formée par le circuit résonateur 25 peut avoir une autre fréquence choisie en fonction du débit de transmission du signal de message (38,4 kHz, 76,8 kHz etc). D'autres fréquences d'horloge sont dérivées de cette forme d'onde par des circuits connus en soi et non représentés, pour assurer une correspondance avec la cadence de transmission des signaux de message. Le circuit résonateur 25 est également utilisé pour fournir un signal d'horloge au micro-ordinateur 8 et à la mémoire RAM 5. Ce signal d'horloge est fourni au micro-ordinateur 8 par la sortie 4.10 du décodeur 4. Les valeurs de la résistance 25b et du condensateur 25c peuvent respectivement être de 4,7 MΩ et de 10 pF.

Le décodeur 4 comprend une mémoire reprogrammable effaçable électriquement du type EEPROM (non représentée) dans laquelle sont conservés les paramètres de système du décodeur 4. Des signaux de commande peuvent être envoyés du micro-ordinateur 8 vers les entrées 4.11, 4.12 et 4.13 pour commander les fonctions du décodeur 4. L'une des fonctions du décodeur 4 qui pourrait être commandée est la cadence de transmission des bits entre le décodeur 4 et la mémoire RAM 5, cette cadence pouvant être aussi élevée que 5000 bits/sec. Dans ce cas, l'information de message est mémorisée par le tampon circulaire se trouvant dans la mémoire RAM 5 sans subir aucun autre traitement (tel que la comparaison entre les deux derniers messages qui viennent d'être mémorisés).

L'entrée 5.3 de la mémoire RAM 5 est connectée au conducteur d'alimentation positive 16.1, tandis que l'entrée 5.13 est reliée au conducteur d'alimentation négative 16.2. La base de temps pour la mémoire RAM 5 est déterminée par le signal d'horloge fourni par la sortie 8.8 du micro-ordinateur 8 à l'entrée 5.4.

La mémoire RAM 5 présente quatre bornes 5.5, 5.6, 5.7 et 5.8 connectées respectivement aux bornes correspondantes 8.1, 8.2, 8.3 et 8.4 du micro-ordinateur 8, ce qui assure une simple connexion parallèle avec ce dernier permettant l'envoi de signaux de commande du micro-ordinateur 8 vers la mémoire RAM 5 et l'envoi en retour d'information de message mémorisée dans la zone de mémoire 7 de la mémoire RAM 5 vers le micro-ordinateur 8 pour que cette information de message puisse être affichée. En fonction de la nature du signal de commande envoyé, les bornes 5.5 à 5.8 peuvent également commander la mémoire RAM 5 pour fournir des information d'état au micro-ordinateur 8 relative à la réception d' information de message par la mémoire RAM 5. D'autres signaux de commande peuvent commander celle-ci pour qu'elle manipule de l'information de message qui y est mémorisée. Une entrée de transfert de données 5.11 de la mémoire RAM 5 est également prévue pour assurer le transfert simultané de données vers les bornes 5.5 à 5.8.

Une entrée 5.9 détermine si les entrées 5.5 à 5.8 transportent des données ou introduisent des signaux de commande dans la mémoire RAM 5. Lorsqu'un signal de niveau haut est présent à l'entrée 5.9, les signaux sur les entrées 5.5 à 5.8 sont interprétés comme étant des signaux de commande provenant du micro-ordinateur 8, tandis que si un signal de niveau bas est présent, les signaux sont interprétés comme étant des données.

Une borne 5.10 de la mémoire RAM 5 permet d'indiquer au micro-ordinateur 8 qu'elle est prête à en recevoir des signaux de commande. Un signal de niveau logique haut sur la borne 5.10 est interprété par le micro-ordinateur 8 comme indiquant que la mémoire RAM 5 est prête pour une nouvelle communication avec le micro-ordinateur 8, tandis qu'un signal logique de niveau bas est interprété comme signifiant que la mémoire RAM 5 est encore en train, soit d'accomplir une manipulation sur des données ou une autre opération, soit de transférer des données au micro-ordinateur 8.

Une borne de sortie 5.12 de la mémoire RAM 5 sert à fournir un signal d'interruption au micro-ordinateur 8 pour lui indiquer son état fonctionnel en réponse à de l'information de message reçue ou à des signaux de commande. Un signal de niveau logique haut est envoyé au micro-ordinateur 8, si par exemple de l'information de message fraîche ou répétée est reçue, ou si une fonction inconnue, interdite ou irréalisable est demandée par le micro-ordinateur. Ce signal d'interruption peut ainsi être utilisé pour indiquer au micro-ordinateur 8 qu'une nouvelle opération est requise, telle que par exemple l'annonce de l'arrivée d'information de message fraîche ou l'envoi d'une nouvelle commande à la mémoire RAM 5. Un signal de niveau bas indique qu'aucune action nouvelle n'est demandée par le micro-ordinateur 8.

Ce micro-ordinateur 8 peut être de tout type connu programmé convenablement. Il est connecté au conducteur d'alimentation positive 16.1 par son entrée 8.5 et au conducteur d'alimentation négative par son entrée 8.6. Une entrée 8.7 reçoit le train d'impulsions d'horloge de la sortie 4.10 du décodeur 4. Une borne de sortie 8.8 fournit un signal d'horloge à l'entrée 5.4 de la mémoire RAM 5.

Le micro-ordinateur 8 comprend également les bornes de sortie 8.9 et 8.11 pour fournir des signaux de commande et de transfert de données décrits ci-dessus respectivement aux entrées 5.9 et 5.11 de la mémoire RAM 5, tandis que les bornes d'entrée 8.10 et 8.12 sont prévues pour recevoir respectivement, les signaux d'acceptation et d'interruption décrits ci-dessus de la mémoire RAM 5.

Un affichage 13 à cristaux liquides est connecté au micro-ordinateur 8. Il comprend des segments numérotés de 00 à 47 qui sont connectés au circuit d'attaque d'affichage (non représenté sur la figure 3) du micro-ordinateur 8 par un bus 13a de sorte que chaque segment peut individuellement être commandé et que de l'information de message souhaitée puisse ainsi être affichée par l'affichage 13. Les spécialistes comprendront que diverses valeurs de tension sont nécessaires pour le circuit d'attaque pour commander les divers segments de l'affichage 13. Les bornes d'entrée 8.13 à 8.16 sont connectées au conducteur d'alimentation positive par l'intermédiaire de condensateurs 8d à 8g pour fournir ces diverses tensions. Les condensateurs 8d à 8g peuvent avoir respectivement des valeurs de 220, 100, 100 et 100 nF. Le micro-ordinateur 8 comprend également des bornes de sortie 8.17, 8.18 et 8.19 pour fournir, de façon connue en soi, des signaux de commande et de base de temps à l'affichage 13 provenant du circuit d'attaque.

Les bornes d'entrée 8.20, 8.21 et 8.22 sont prévues pour stabiliser et lisser les niveaux de tension internes au micro-ordinateur 8. L'une des bornes d'un condensateur 8h est connectée à l'entrée 8.20, tandis que l'une des bornes d'un autre condensateur 8i est connectée à l'entrée 8.21. Les autres bornes des condensateurs 8h et 8i sont raccordées ensemble à la borne 8.22.

Le micro-ordinateur 8 est également pourvu d'entrées 8.23 à 8.26 de commande par l'utilisateur, dont chacune est connectée au conducteur d'alimentation positive 16.1 par l'intermédiaire d'interrupteurs 8j, 8k, 8l et 8m pouvant être actionnés par l'utilisateur. Lorsque tel est le cas, un signal de niveau logique haut est appliqué aux entrées de commande par l'utilisateur, par exemple lorsqu'il souhaite mettre en marche ou hors service le pager 1, le rendre silencieux, protéger le message affiché par l'affichage 13 et supprimer un message affiché. On comprendra que diverses autres fonctions à commande par l'utilisateur peuvent être prévues de cette manière et qu'une entrée séparée n'est pas nécessaire pour chacune de ces fonctions ainsi prévues; par exemple, un ou plusieurs commutateurs ou boutons-poussoirs peuvent être activés, selon une séquence particulière pour indiquer au micro-ordinateur 8 qu'une certaine fonction doit être exécutée.

Le circuit 14 d'entrées de commande et de pièce d'horlogerie est connecté au conducteur 17.1 d'alimentation positive de l'alimentation portable 17 (non représentée sur la figure 3) par la borne 14.1 et au conducteur d'alimentation négative 17.2 de l'alimentation 17 par la borne 14.2.

Le circuit 14 comprend également des entrées 14.3, 14.4 et 14.5 qui servent à constituer des entrées d'utilisateur supplémentaires pour permettre l'accomplissement par le pager 1 de certaines fonctions à commande par l'utilisateur, et également la commande du fonctionnement de la pièce d'horlogerie 15 qui est commandée par le circuit 14. Une séquence particulière de signaux appliqués aux entrées 14.3, 14.4 et 14.5, ou de signaux envoyés initialement à d'autres entrées, peut être utilisée pour déterminer si les entrées 14.3, 14.4 et 14.5 commandent le fonctionnement du pager ou de la pièce d'horlogerie 15. Les entrées 14.3, 14.4 et 14.5 sont connectées respectivement à l'une des bornes des interrupteurs 14b, 14c et 14d, leurs autres bornes étant connectées ensemble à l'entrée 14.1. Les interrupteurs peuvent être réalisés sous toute forme utilisable par l'utilisateur. Un autre interrupteur 14e est connecté entre le conducteur d'alimentation positive 17.1 et une entrée 8.27 du micro-ordinateur 8 afin de lui indiquer lequel du pager ou de la pièce d'horlogerie est commandé.

Le circuit 14 comporte encore deux sorties 14.6 et 14.8, connectées respectivement à l'une des bornes de deux bobines 15a et 15b de la pièce d'horlogerie 15. Les autres bornes de ces bobines sont raccordées à un connexion commune de retour 14.7. Les spécialistes comprendront que dans l'exemple choisi ici, les bobines 15a et 15b appartiennent à un moteur bidirectionnel de pièce d'horlogerie analogique à quartz, par ailleurs bien connue, mais qu'une pièce d'horlogerie de tout autre type peut être prévue, y compris une pièce d'horlogerie digitale, cas auquel, bien entendu un moteur de montre n'est pas nécessaire. Diverses autres entrées peuvent être prévues pour le circuit 14 pour commander toute autre fonction de la pièce d'horlogerie.

Deux autres sorties 14.9 et 14.10 du circuit 14 sont reliées respectivement aux entrées 8.28 et 8.29 afin de fournir au micro-ordinateur 8 des données représentant les signaux appliqués aux entrées 14.3, 14.4 et 14.5. Un résonateur à quartz 14.9 est relié à l'entrée 14.11 et à la sortie 14.12 du circuit 14 afin de constituer une base de temps pour celui-ci.

Le pager 1 comprend également un avertisseur 26 couplé au micro-ordinateur 8 pour qu'une nouvelle information de message reçue par le décodeur 4 puisse être annoncée. Un transducteur sonore électrique 26a ou "buzzer" est connecté par l'une de ses bornes au collecteur d'un transistor de commutation 26b et par son autre borne au conducteur d'alimentation positive 16.1. Le collecteur du transistor 26b est également connecté à la sortie 8.31 du micro-ordinateur 8 par l'intermédiaire d'une résistance de polarisation 26c qui peut avoir une valeur de 18 kΩ. Normalement, cette sortie est maintenue à un niveau logique élevé. L'émetteur du transistor 26b est connecté au conducteur d'alimentation négative 16.2 et à la borne 8.6 du micro-ordinateur 8. La base du transistor 26b est connectée à la sortie 8.30 de celui-ci. Une self 26d d'une valeur de 45 mH, par exemple est connectée en parallèle au buzzer 26a. Enfin, un condensateur 26e de stabilisation de tension d'une valeur de 4.7 µF, est connecté entre les conducteurs d'alimentation positive 16.1 et négative 16.2. En fonctionnement normal, la sortie 8.30 est maintenue à un faible niveau et le transistor 26b est non conducteur.

Lorsque le pager 1 doit annoncer la réception d'un appel ou l'accomplissement d'une autre fonction, un signal pouvant avoir une forme d'onde variable est envoyée par la sortie 8.31 ce qui engendre une tension aux bornes du buzzer 26a, qui va ainsi produire un premier son. Un son différent peut être produit par l'avertisseur 26, lorsqu'un signal est envoyé par la sortie 8.30 vers la base du transistor 26b qui alors se met à conduire. Une tension différente est alors engendrée aux bornes du buzzer 26a et un second son est produit. Ces différents sons peuvent être utilisés pour annoncer l'accomplissement de diverses fonctions par le pager 1.

On va maintenant décrire en détail une partie du décodeur 4 chargée plus spécialement de la reconnaissance des mots de synchronisation selon les concepts de la présente invention, en se référant à la figure 4. Sur cette figure, on reconnaît le résonateur 25 qui fournit sur sa sortie 25.1 le signal d'horloge qui cadence les opérations exécutées notamment dans cette partie du décodeur 4. La fréquence de ce signal d'horloge est choisie en fonction de celle des bits du signal de message entrant, soit 512, 1200 ou 2400 Hz.

Le décodeur comprend également un compteur synchrone 30 qui présente une entrée 30.1 raccordée à la sortie 25.1 de l'horloge ou résonateur 25. Le compteur 30 comporte une entrée de comptage 30.2 raccordée à la sortie 31.1 d'une porte OU-EXCLUSIF 31 dont l'une des entrées 31.2 est connectée à l'entrée 4.1 du décodeur 4. Si l'entrée 30.2 est au niveau logique haut pendant le flanc descendant du signal d'horloge de la sortie 25.1, alors la valeur contenue dans le compteur 30 est incrémentée d'une unité. Si l'entrée 30.2 est au niveau bas, l'état précédent du compteur 30 est conservé. Le compteur 30 comprend également une entrée de remise à zéro 30.3 connectée à la sortie 32.1 d'un microprocesseur 32 qui commande les opérations se déroulant dans cette partie du décodeur 4 et qui sera décrit plus en détail par la suite.

Le compteur 30 comporte également une sortie 30.4 raccordée à une entrée 32.2 du microprocesseur 32 et qui fournit un niveau logique "1", lorsque le contenu du compteur est à zéro. Sinon, cette sortie 30.4 est à "0". Une autre sortie 30.5 du compteur 30 est raccordée à une entrée 32.3 du microprocesseur 32 et elle applique à celui-ci un niveau logique "1", lorsque le contenu du compteur 30 est inférieur ou égal à 2 (0,1 ou 2). Sinon, cette sortie fournit un niveau logique "0" au microprocesseur 32.

Un registre de données 33 à 32 bits est connecté par une entrée d'horloge 33.1 à la sortie 25.1 de l'horloge 25 et par une entrée de chargement 33.2 à la sortie 3.3 du récepteur 3. Ainsi, ce registre se charge sériellement au rythme de l'horloge 25 avec les signaux de message démodulés par le récepteur 3 de telle sorte que le registre contienne toujours les derniers 32 bits reçus du récepteur. Les 32 bits sont disponibles en parallèle sur une sortie 33.2 du registre.

Le décodeur comprend également un registre de préambule 34 à 32 bits qui par son câblage contient une suite de bits alternativement "1" et "0" (1010 1010 1010 1010 1010 1010 1010 1010). Le signal correspondant est disponible sur une sortie 34.1 de ce registre. Il correspond à une partie du préambule du format POGSAG.

Un autre registre 35 de mot-code de synchronisation contient le mot-code de synchronisation du format POGSAG, c'est-à-dire celui représenté à la figure 2B. Ce registre est monté en registre en anneau et comporte une entrée d'horloge 35.1 connectée à la sortie 25.1 de l'horloge 25. Le registre comporte une entrée 35.2 de bit de poids le plus fort qui est bouclée sur une entrée 35.3 de bit de poids le plus faible. Ainsi, les bits du mot-code de synchronisation contenu dans ce registre 35 sont recirculés au rythme du signal d'horloge, un décalage vers la gauche du mot se produisant à chaque flanc montant de ce signal. Le registre 35 comprend également une entrée 35.4 de remise à l'état initial connectée à une sortie 32.4 du microprocesseur 32. Lorsque cette entrée 35.4 est portée au niveau "1", le mot-code de synchronisation reprend sa position initiale ou "centrée" dans le registre 35. Le contenu instantané du registre 35 est disponible sur 32 bits sur une sortie en parallèle 35.5.

Un multiplexeur sur 32 bits 36 comporte une première entrée 36.1 connectée à la sortie 34.1 du registre 34 et une seconde entrée 36.2 raccordée à la sortie 35.5 du registre 35. La sortie 36.3 de ce multiplexeur 36 est connectée à une première entrée 37.1 d'un comparateur 37. Le multiplexeur 36 comprend encore une entrée de commande 36.4 raccordée à une sortie 32.5 du microprocesseur 32. Lorsque l'entrée 36.4 du multiplexeur 36 est au niveau "1", la sortie 36.3 fournit le mot binaire présent à l'entrée 36.2 du multiplexeur, sinon c'est le mot binaire présent sur l'entrée 36.1 qui apparaît à la sortie 36.3.

Le comparateur 37 comporte une seconde entrée 37.2 qui est raccordée à la sortie 33.3 du registre de données 33, ainsi que deux sorties 37.3 et 37.4 connectées aux entrées 32.6 et 32.7 du microprocesseur 32. La sortie 37.3 est au niveau"1", lorsqu'il y a égalité entre les mots binaires appliqués respectivement aux entrées 37.1 et 37.2, sinon cette sortie est au niveau "0". La sortie 37.4 est au niveau "1", lorsque il y a égalité entre les mots binaires ou une différence entre 1 ou 2 bits de ces mots binaires, sinon cette sortie 37.4 est au niveau "0".

Le décodeur 4 comprend également un registre d'adresse 38 de 19 emplacements binaires dont le bit ayant le poids le plus fort est à "0" et dont le 18 autres bits sont les 18 bits de poids fort de l'adresse du pager considéré. Si le premier bit d'un mot-code d'information du signal entrant de message est à zéro, cela signifie qu'il s'agit d'un mot d'adresse. Le registre 38 est branché de la même façon que le registre 35 de mot-code de synchronisation. Il comporte donc une entrée d'horloge 38.1 connectée à la sortie 25.1, une entrée 38.2 de poids le plus faible connectée à une borne 38.3 de poids le plus fort, et une entrée 38.4 de remise à l'état initial qui est raccordée à la sortie 32.8 du microprocesseur 32. Par conséquent, le contenu du registre 38 est recirculé sur les flancs montants du signal d'horloge en se décalant vers la gauche. Lorsque l'entrée 38.4 est portée au niveau "1", le mot-code d'adresse dans le registre 38 est recentré.

La borne 38.3 du registre 38 est connectée à l'une des entrées 39.1 d'un multiplexeur 39 à un seul bit dont l'autre entrée 39.2 est reliée à la borne 35.3 du registre 35 de mot-code de synchronisation. La sortie 39.3 du multiplexeur 39 est raccordée à l'entrée 31.3 de la porte OU-EXCLUSIF 31. Le multiplexeur 39 comporte également une entrée de commande 39.4 qui est reliée à une sortie 32.9 du microprocesseur 32. Si l'entrée 39.4 est au niveau "1", la sortie 39.3 du multiplexeur 39 prend le niveau de l'entrée 39.2. Dans le cas contraire, cette sortie prend le niveau de l'entrée 39.1.

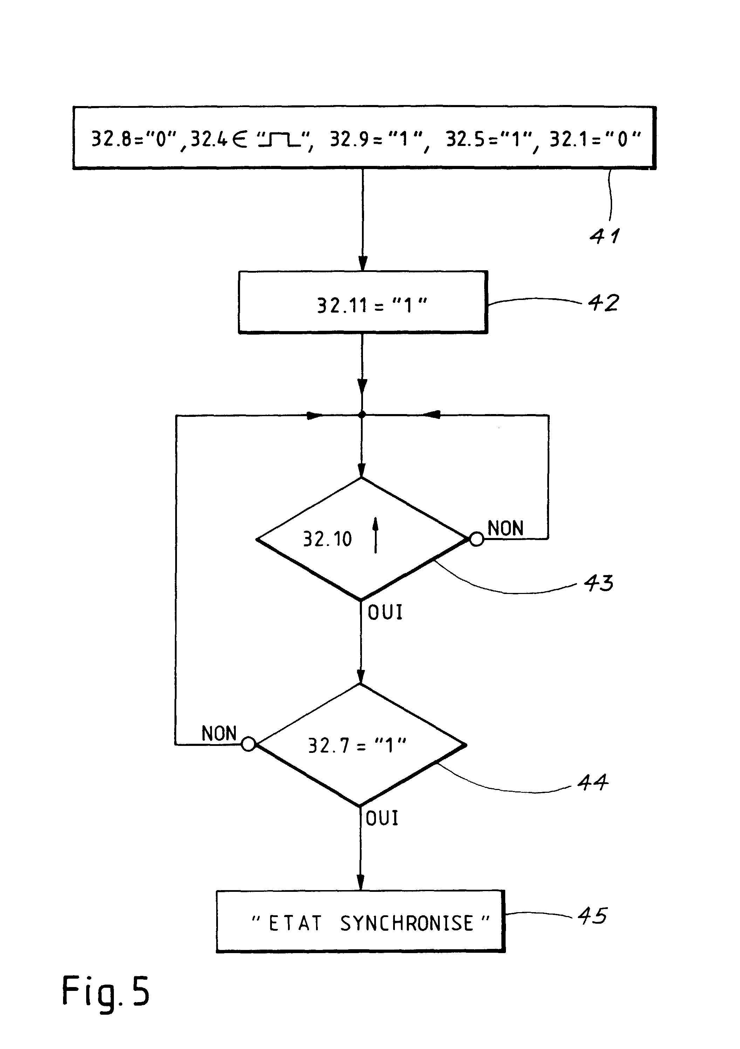

Le microprocesseur 32 est destiné à exécuter un microprogramme simple capable de porter les diverses sorties de commande 32.1, 32.5, 32.9, 32,4 et 32.8 au niveau logique voulu sous la commande du signal d'horloge qui lui parvient sur l'entrée 32.10. De plus, le microprocesseur 32 est capable de tester l'état de ses entrées 32.10, 32.2, 32.3, 32.7, et 32.6. Les organigrammes correspondant à ce programme sont représentés sur les figures 5, 6A, 6B et 7.

Le microprocesseur élabore ainsi un signal de sortie sur sa sortie 32.11 qui par l'intermédiaire d'un tampon 40 permet de commander la mise sous tension du récepteur 3 ou sa coupure par rapport à l'alimentation qui lui parvient par l'intermédiaire des conducteurs 16.1 et 16.2.

L'invention est basée sur les considérations suivantes.

Avec les composants électroniques modernes, il est possible de munir le pager d'une horloge 25 (résonateur à quartz) dont la précision est d'environ 35 ppm à température constante et compte tenu des tolérances de fabrication et le veillissement des composants.

Par ailleurs, on sait que le format POGSAG prévoit une répétition du mot-code de synchronisation tous les 544 bits et que d'autres formats de transmission de signaux de message pour pagers ont une fréquence de répétition de leur synchronisation de même ordre de grandeur.

Compte tenu de ses deux constatations, l'invention exploite le fait qu'une fois la synchronisation obtenue, il est extrêmement improbable que le pager perde cette synchronisation avant de recevoir le mot-code de synchronisation suivant. Par conséquent, il n'est pas nécessaire de contrôler chaque fois la totalité du mot-code de synchronisation reçu, mais au contraire selon la proposition de la présente invention, de n'en contrôler systématiquement bit par bit qu'une partie et de couper le récepteur 3, grand consommateur d'énergie, pendant la réception du reste du mot-code de synchronisation, la période de coupure étant directement bénéfique pour l'économie de l'énergie et, partant pour l'autonomie du pager.

Ce processus est mis en oeuvre dans le montage que l'on vient de décrire à propos de la figure 4, de la façon représentée sur les figures 5, 6A, 6B et 7.

### Etat non synchronisé

On suppose que le pager n'est pas synchronisé, c'est-à-dire que depuis sa mise en fonction, il n'a pas reconnu le mot-code de synchronisation dans le signal de message émis par la station centrale, ou qu'il a perdu cette synchronisation, c'est-à-dire qu'il n'a plus reconnu le mot un certain nombre de fois alors qu'il est en réception.

Depuis cet état non synchronisé, le microprocesseur élabore les signaux décrits dans le bloc 41 de la figure 5. En d'autres termes, la sortie 32.8 est à "0", une impulsion (passage vers le niveau "1" et passage vers le niveau "0" 13 microsecondes plus tard) est engendrée sur la sortie 32.4, et les sorties 32.9,32.5 et 32.1 sont respectivement à "1", "1" et "0". Bien entendu, la sortie 32.11 est à "1" (bloc 42 de la figure 5), car le récepteur 3 est alimenté pour assurer la démodulation du signal de message.

Il est à noter que la longueur de l'impulsion engendrée sur la sortie 32.4 est égale à la longueur d'une demi-période du signal d'horloge de base qui, dans l'exemple décrit ici, est à 32 kHz. Par exemple, si ce signal de base est à 76,8 kHz, la longueur de l'impulsion sera de 6,5 microsecondes.

Le mot-code de synchronisation est présent dans le registre 35 et y est maintenu centré par le signal apparaissant sur l'entrée 35.4 de ce registre. Des mots de synchronisation vont se trouver périodiquement dans le registre de données 33. Pendant ce temps, le microprocesseur 32 vérifie, à chaque flanc montant du signal d'horloge, si le signal de l'entrée 32.6 est à "1" (blocs 43 et 44 de la figure 5). Dès que le comparateur 37 a reconnu l'égalité entre les registres 33 et 35, le microprocesseur 32 constate cette égalité sur son entrée 32.6, qui passe alors à "1". Le pager est alors déclaré "synchronisé" (bloc 45) et peut attendre l'adresse qui lui est alloué dans la trame du paquet de données subséquent, le récepteur étant coupé ou mis en marche en conséquence par le microprocesseur.

### Etat synchronisé.

512 bits plus tard, la station centrale émettra un nouveau mot-code de synchronisation. Comme déjà indiqué ci-dessus, ni ce mot-code de synchronisation, ni les suivants si une perte de synchronisation n'est pas constatée, ne sont contrôlés dans leur totalité. Les recherches effectuées par la Demanderesse ont permis de constater qu'il suffit de ne contrôler qu' un très faible nombre des bits de chaque mot-code de synchronisation reçu pour conserver la synchronisation correcte pour autant que les conditions de réception ne changent pas. On verra par la suite comment, selon l'invention, on parviendra dans ce dernier cas à retrouver la synchronisation.

Dans l'exemple de réalisation décrit ici, seulement six bits de chaque mot-code de synchronisation entrant sont contrôlés par le montage de la figure 4, après le déroulement de la première mise à synchronisation que l'on vient de décrire à propos de la figure 5. Selon une caractéristique avantageuse de l'invention et dans le cadre du format POGSAG, les bits contrôlés sont ceux qui dans la suite des bits du mot-code de synchronisation présentent le plus de transitions ce qui permet d'obtenir le contrôle le plus performant. Ces bits sont ceux numérotés de 19 à 24 (010101) sur la figure 2C. En principe, on pourrait donc ne mettre en marche le récepteur 3 qu'à l'apparition du 19ième bit de chaque mot-code de synchronisation du signal de message entrant. Cependant, le récepteur 3 a besoin d'un temps de pré-enclencement pour lui permettre de se stabiliser après l'application de la tension d'alimentation. Ce temps est avantageusement choisi d'une durée de huit bits pour un débit binaire de 512 bits/seconde. du signal de message. D'une façon générale, le temps de pré-enclenchement est choisi selon la formule suivante: tpr=1/D.E où tpr est le temps de pré-enclenchement, D le débit binaire du signal de message et E le nombre de bits de pre-enclenchement avec 0< E< 30.

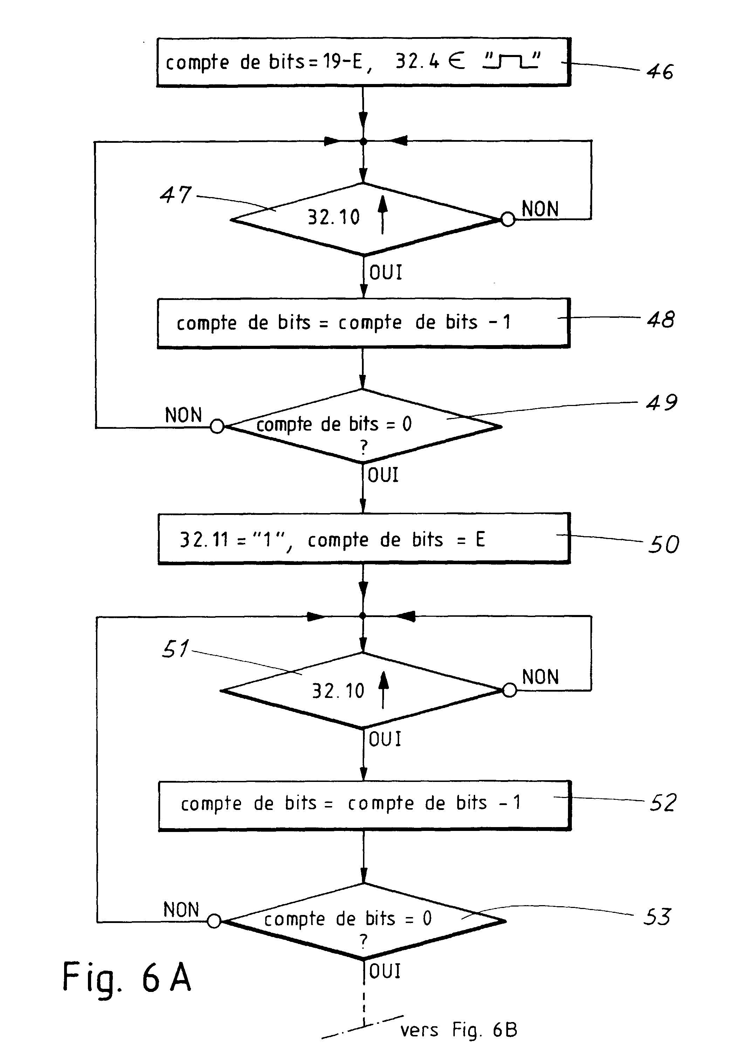

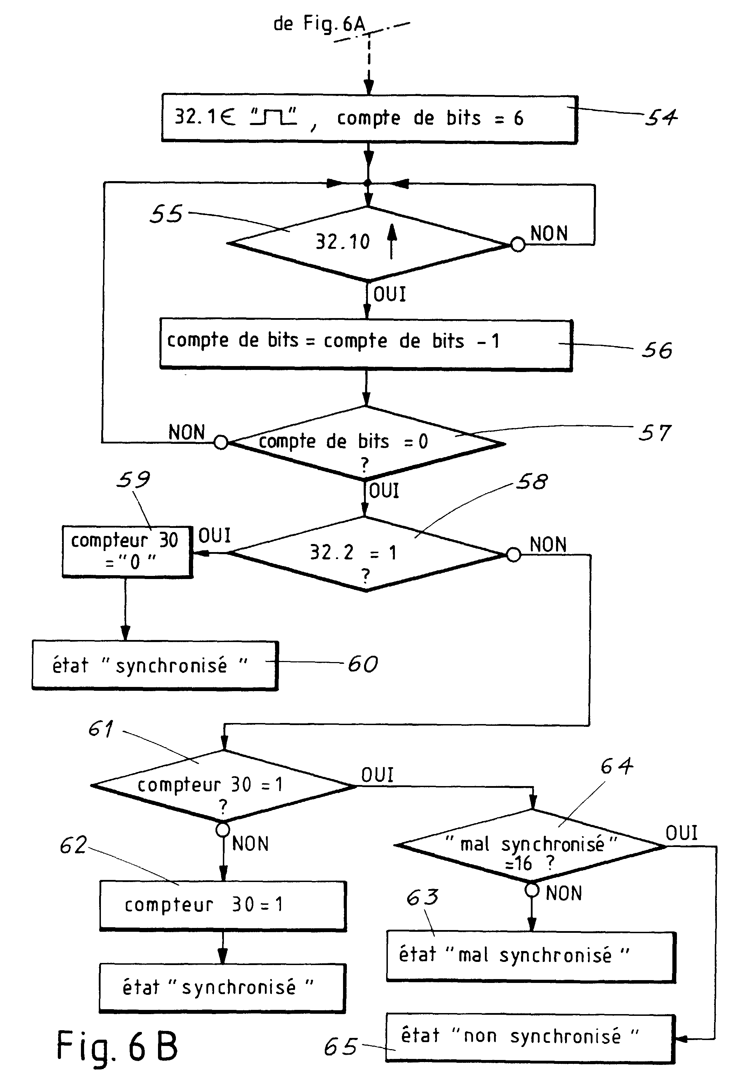

Ceci étant, après constatation de la synchronisation comme décrit ci-dessus, le microprocesseur 32 attend 512 bits du signal de message par l'intermédiaire de ses organes internes (non représentés sur les figures), puis, selon le bloc 46 de la figure 6 charge un compteur de bits (faisant partie de ces organes internes et également non représenté) de la valeur (19 - E), tout en appliquant une impulsion de 13 microsecondes par la sortie 32.4 à l'entrée 35.4 du registre 35 ce qui recentre le mot-code de synchronisation dans ce registre.

L'horloge 25 (blocs 47, 48 et 49) décompte alors le compteur de bits interne du microprocesseur 32 jusqu'à la valeur 0, pendant que le contenu du registre 35 recircule au rythme du signal d'horloge. Lorsque le compte est à zéro (bloc 50), le microprocesseur 32 délivre un signal sur sa sortie 32.11 pour mettre en marche le récepteur 3, tandis que la valeur E est chargée dans le compteur de bits interne. Conformément aux blocs 51, 52 et 53, le compteur est de nouveau vidé de son contenu au rythme du signal d'horloge, pendant que le mot-code de synchronisation continue de circuler dans le registre 35. Simultanément, les bits entrants et les bits du mot-code de synchronisation sont comparés successivement les uns aux autres dans la porte 31, le multiplexeur 39 commandé à cet effet par le signal de la sortie 32.9 sur son entrée 39.4, aiguillant les bits du mot-code de synchronisation vers l'entrée 31.3 de cette porte 31. Cependant, le compteur 30 n'étant pas encore activé, cette comparaison ne produit encore aucun effet.

Lorsque le compteur de bits interne est parvenu à zéro, le dix-neuvième bit du mot-code de synchronisation se trouve à la fois sur les deux entrées de la porte 31, à condition que la synchronisation ait été conservée, bien entendu. Selon le bloc 54, le microprocesseur 32 fournit alors le signal d'activation à sa sortie 32.1 au compteur 30, pendant que simultanément il charge le nombre "6" dans son compteur de bits.

Pendant les six impulsions d'horloge suivantes (blocs 55, 56 et 57; figure 6B), le contenu du compteur de bits est décompté, les six bits (19 à 24) du mot-code de synchronisation dans le registre 35 sont comparés aux six bits entrants du signal de message et le microprocesseur surveille l'état du compteur 30 à l'aide de son entrée 32.2 (bloc 58, figure 6).

Si le signal à la borne 32.2 reste à "1" pendant les six impulsions d'horloge suivantes, cela signifie que les bits 19 à 24 du mot-code de synchronisation correspondent respectivement un à un aux bits entrants et que le pager est donc toujours synchronisé (bloc 59).

Si, par contre, le signal à la borne 32.2 passe à "0" au cours des six coups d'horloge de vérification des bits du mot-code de synchronisation, cela signifie que la comparaison d'un bit aux entrées 31.2 et 31.3 n'a pas donné de résultat juste. Ce résultat est mémorisé dans le compteur 30, mais le pager reste dans l'état synchronisé (bloc 60).

Lors de la réception du mot-code de synchronisation suivant (512 bits plus tard), le même processus que l'on vient de décrire est exécuté. Si après la comparaison des six bits, l'entrée 32.2 est à "1" (bloc 61), le pager reste en mode synchronisé (bloc 63) et la mémorisation éventuelle d'une erreur résultant de la comparaison lors de la réception précédente est annulée par la remise à zéro du compteur 30 (bloc 61).

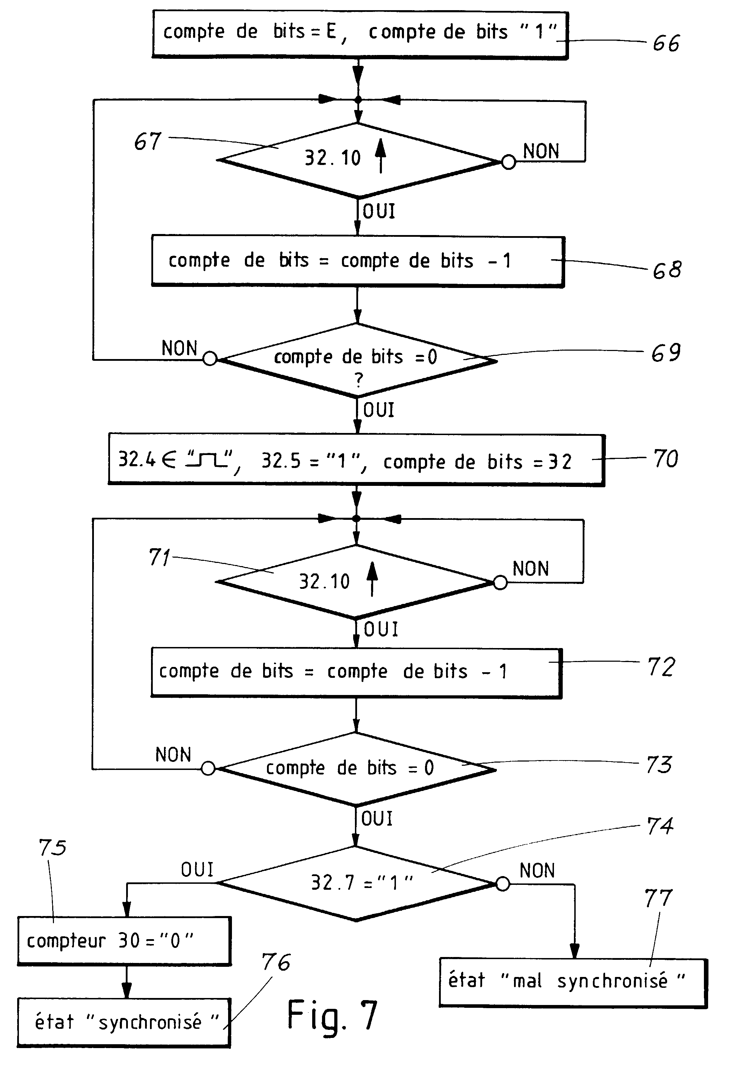

Si, par contre, l'entrée 32.2 est de nouveau à zéro, le pager passe en état "mal synchronisé" (bloc 63), ce qui signifie que le prochain mot-code de synchronisation sera vérifié sur 32 bits, comme décrit ci-dessous à propos de la figure 7.

Si le pager reste dans l'état "mal synchronisé" pendant 16 trames consécutives (bloc 64), il repasse à l'état "non synchronisé" (bloc 65) ce qui correspond à son état initial et le microprocesseur 32 recommence alors les opérations comme décrit à propos de la figure 5. Dans cet état, le pager ne peut plus recevoir de l'information de message, car la procédure de recherche d'adresse est alors interrompue.

En l'état "mal synchronisé", le nombre E est chargé dans le compteur de bits interne du microprocesseur 32, tandis que le signal 32.11 passe à "1" pour remettre le récepteur 3 en marche (bloc 66, figure 7). Après le décomptage jusqu'à zéro de ce compteur (blocs 67, 68 et 69), le microprocesseur applique une impulsion à l'entrée 35.4 du registre 35, applique un "1" à l'entrée 36.4 du multiplexeur 36 et charge son compteur de bits interne avec le nombre 32 (bloc 70).

Après décomptage de 32 impulsions d'horloge, le microprocesseur 32 vérifie l'état de son entrée 32.7 pour constater si le comparateur 37 a trouvé une égalité entre le mot-code de synchronisation mémorisé dans le registre 35 et le mot-code de synchronisation entrant du signal de message (blocs 71, 72, 73 et 74).

Si le microprocesseur constate un "1" sur cette entrée 32.7 (bloc 75), cela signifie que le mot-code de synchronisation est de nouveau reconnu et le pager passe dans son état "synchronisé" (bloc 71) sinon le pager reste dans l'état "mal synchronisé" (bloc 77) et suit de nouveau l'organigramme de la figure 7.

Il est à noter que lorsqu'il est dans l'état "synchronisé" ou "mal synchronisé" le pager tente de reconnaître son adresse dans le paquet de bits suivant chaque mot-code de synchronisation et ce dans la trame de ce paquet qui lui est alloué.

Par conséquent, si cette trame suit dans le temps immédiatement le mot-code de synchronisation, le récepteur n'est pas coupé quant à son alimentation.

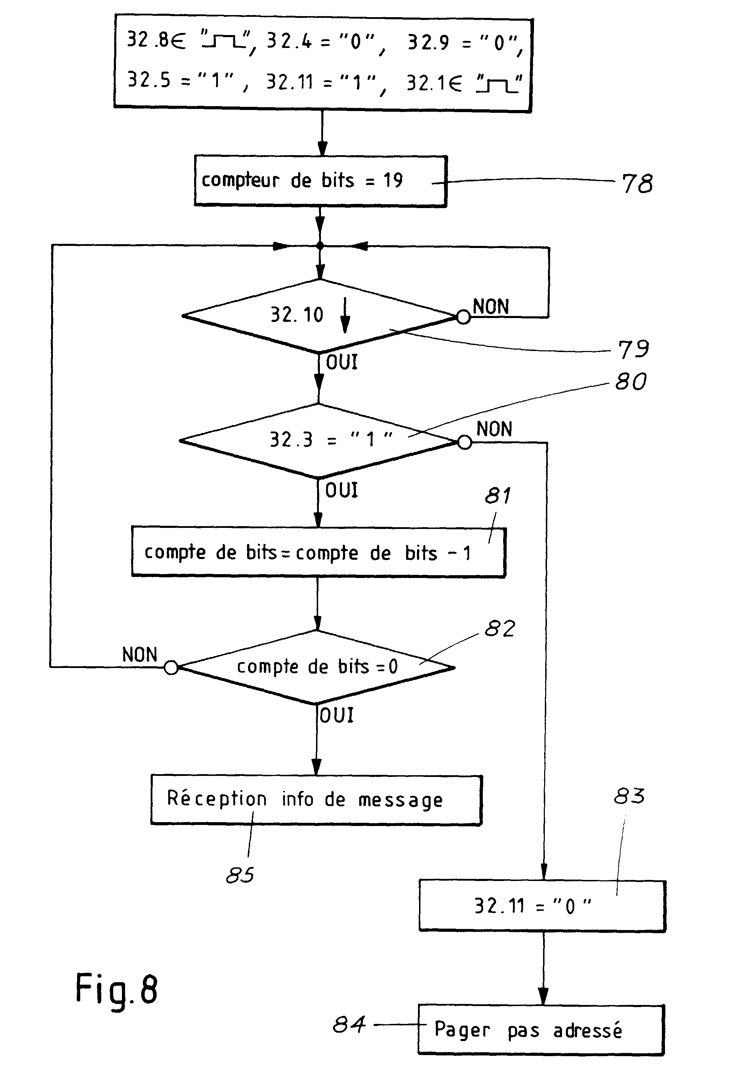

On va maintenent décrire le processus de reconnaissance du mot-code d'adresse en se référant plus particulièrement à la figure 8.

On suppose que le pager est à "l'état synchronisé" comme décrit ci-dessus ou alternativement à "l'état mal synchronisé" cas dans lesquels sa recherche d'adresse n'est pas bloquée.

Comme déjà indiqué ci-dessus, pour un pager donné, le mot-code d'adresse qui lui correspond de façon unique se trouve toujours dans la même trame du signal de message. Par conséquent, il est inutile d'alimenter le récepteur pendant l'émission des autres trames d'un même paquet de données émis.

Si le pager considéré a son mot-code d'adresse dans la première trame (trame 0), le récepteur 3 n'est pas coupé après la reconnaissance du mot-code de synchronisation et le processus de reconnaissance du mot-code d'adresse peut commencer aussitôt. Par contre, si le mot-code d'adresse se trouve dans l'une des trames 1 à 7, le microprocesseur 32 attendra le nombre d'impulsions d'horloge correspondant au temps de passage des trames précédant celle dans laquelle se trouve le mot-code d'adresse du pager considéré. A cet effet, le microprocesseur 32 comporte un registre (non représenté) qui contient ce nombre et qui est décompté par le signal d'horloge appliqué à l'entrée 32.10.

Il est à noter que le nombre en question est fixé de telle manière que le récepteur soit mis en marche quelques bits avant (huit par exemple) que la trame interressante ne commence, afin de lui permettre de se stabiliser convenablement, comme déjà décrit ci-dessus à propos du processus de reconnaissance du mot-code de synchronisation.

Après écoulement de cette durée de stabilisation du récepteur (autrement dit juste au début de la trame interressante, le microprocesseur 32 fournit une impulsion de 13 microsecondes à sa sortie 32.8, maintient la sortie 32.4 à "0", fournit un "0" à sa sortie 32.9, un "1" à sa sortie 32.5 et un "1" à sa sortie 32.11 et applique une impulsion de 13 microsecondes à sa sortie 32.1. Le montage est alors prêt à effectuer la reconnaissance d'adresse.

Le mot-code d'adresse selon le format POGSAG est formé de 32 bits dont le premier est toujours à "0" par opposition au premier bit d'un mot-code de message qui est toujours à "1". Le mot-code d'adresse comporte ensuite une série de 18 bits qui constituent l'information d'adresse caractéristique du pager considéré. Les autres bits du mot-code d'adresse ne sont pas utiles pour l'adressage proprement dit et constituent des bits de fonction et de test.

De ce fait, le registre 38 (figure 4) contient les 19 bits du mot-code d'adresse identifiant le pager en question. Le compteur de bits interne du microprocesseur 32 est chargé avec ce nombre (bloc 78 de la figure 8) et la vérification bit par bit du mot-code d'adresse est commencée pour parcourir la boucle de programme formée par les blocs 79 à 82 du programme du microprocesseur 32. Pendant le déroulement de ces opérations, le compteur 30 surveille le nombre d'inégalités constatées pendant la comparaison des bits successifs. Si le compteur constate plus de deux inégalités, sa sortie 30.5 passe au niveau "1" à la suite de quoi, le microprocesseur 32 fait passer la sortie 32.11 au niveau "0", ce qui coupe le récepteur 3 pendant le reste du mot-code d'adresse (blocs 83 et 84). Par contre, si le test effectué dans le bloc 82 indique que le compteur de bits interne du microprocesseur 32 est parvenu à zéro, cela indique que le pager considéré est adressé et qu'il doit s'apprêter à recevoir l'information de message suivant le mot-code d'adresse dans le signal de message entrant (bloc 85).

D'une façon générale, on voit donc que l'invention apporte une réelle possibilité d'économie d'energie.

En effet, la plupart du temps pendant lequel le pager est à l'écoute du signal de message, chaque reconnaissance du mot-code de synchronisation ne nécessite l'analyse que de six bits sur 32, alors que dans l'art antérieur, cette analyse porte systématiquement sur les 32 bits du mot-code de synchronisation. Il est à noter que dans les deux cas, le récepteur du pager doit être mis en marche préalablement à cette analyse de sorte que le gain en énergie consommée porte comparativement sur la durée de 26 bits pour chaque mot-code de synchronisation ce qui est considérable.

Par ailleurs, en ce qui concerne le mot-code d'adresse, une grande économie peut être réalisée, car statistiquement on sait qu'un pager déterminé n'est appelé qu'un faible nombre de fois par jour, c'est-à-dire que sa propre adresse ne lui parvient que rarement par rapport à tous les mots-code d'adresse qui sont contenus dans le signal de message émis par l'émetteur central. Grâce à l'invention, le récepteur est coupé immédiatement dès qu'il est constaté lors de la comparaison des mots-code d'adresse, que le pager n'est pas adressé au moment considéré.

Ainsi, rien qu'en utilisant la reconnaissance des mots-code de synchronisation selon le processus décrit ci-dessus, par rapport au pager de la technique antérieure décrite dans le brevet EP 0 118 153, l'invention apporte une économie relative d'énergie de -23% (autonomie +30%) pour une durée de pré-enclenchement du récepteur 3 de huit bits et une économie de -20% (autonomie +26%) au cas où cette durée est celle de seize bits consécutifs.

Si on n'utilise que la reconnaissance des mots-code d'adresse selon le processus décrit ci-dessus, l'économie relative d'énergie est de -38% (autonomie +60%) pour une durée de pré-enclenchement du récepteur 3 de huit bits et elle est de -27% (autonomie + 36%), si cette durée est de seize bits.

En cumulant dans un même pager les deux processus de reconnaissance portant alors tant sur les mots-code de synchronisation que sur les mots-code d'adresse, la consommation sera respectivement réduite de 61% avec huit bits et de 47% avec seize bits, le gain en autonomie étant alors respectivement de +255% et de +89%. Ces chiffres concernent le cas le plus favorable dans lequel le pager est synchronisé et la réception se fait dans de bonnes conditions.

Il est à noter que la présente invention a été décrite dans l'application à un pager utilisant le format POGSAG. Toutefois, elle peut tout aussi bien être appliquée à des pagers fonctionnant dans d'autres formats pourvu que le principe d'un traitement sériel des bits des mots code de synchronisation et d'adresse soit respecté.

## Revendications

1. Pager destiné à la reception de signaux de message radiodiffusés composés d'un mot-code de synchronisation répété à intervalles réguliers, de mots-code d'adresse et de mots-code d'information de message, ladite information de message comprenant un ou plusieurs messages, le pager comprenant:
un récepteur (3) pour recevoir et démoduler lesdits signaux codés,
un décodeur (4) destiné à décoder lesdits signaux de message codés pour discriminer lesdits mots-code de synchronisation, d'adresse et d'information de message et pour, s'il s'avère que ledit pager est adressé, extraire l'information de message qui lui est destinée,
un dispositif de mémoire (5) connecté audit décodeur (4) et destiné à mémoriser ladite information de message,
un dispositif (8, 13) connecté audit dispositif de mémoire (5) pour traiter ladite information de message afin de la rendre intelligible,
des moyens d'alimentation (16, 16.1, 16.2) pour alimenter ledit pager,
des moyens de commutation (3b) connectés entre ledit récepteur (3) et lesdits moyens d'alimentation (16, 16.1, 16.2) pour appliquer sélectivement a ce récepteur la tension d'alimentation fournie par lesdits moyens d'alimentation,
des moyens (35) pour mémoriser ledit mot-code de synchronisation comportant une pluralité de bits chacun se trouvant soit dans un état logique haut soit dans un état logique bas, et
des moyens de commande (25, 30 à 40) pour commander lesdits moyens de commutation (3b) du récepteur de manière à lui appliquer ladite tension pour permettre la réception du mot-code de synchronisation et opérer une comparaison entre ledit mot-code de synchronisation mémorisé et le mot-code de synchronisation dudit signal de message,
lesdits moyens de commande étant agencés pour couper ladite tension après la reconnaissance du mot-code de synchronisation,
caractérisé en ce que
lesdits moyens de commande comprennent des moyens (25, 30, 31, 32, 35, 39) pour effectuer ladite comparaison bit par bit sur une partie au moins des bits du mot-code de synchronisation qui présente le plus grand nombre de changement d'état entre bits successifs et pour permettre l'actionnement desdits moyens de commutation afin de couper ladite tension d'alimentation fournie audit récepteur lorsque la comparaison indique la reconnaissance du mot-code de synchronisation, par identité d'un nombre limité de bits seulement de ce mot.

2. Pager suivant la revendication 1, caractérisé en ce que, dans le cas où lesdits signaux de message se présentent sous le format POGSAG, lesdits moyens de commande (25, 30 à 40) sont agencés pour effectuer ladite comparaison sur les bits 19 à 24 du mot-code de synchronisation.

3. Pager suivant l'une quelconque des revendications 1 ou 2, caractérisé en ce que lesdits moyens de commande (25, 30 à 40) sont agencés pour commander lesdits moyens de commutation (3b) afin qu'ils branchent ledit récepteur (3) auxdits moyens d'alimentation (16, 16.1, 16.2) préalablement à ladite comparaison pendant une durée correspondant à celle d'un nombre de bits prédéterminés dudit signal de message.

4. Pager suivant la revendication 3, caractérisé en ce que ladite durée est celle d'un nombre de bits situé entre 1 et 30 inclus.

5. Pager suivant l'une quelconque des revendications 1 à 4, caractérisé en ce que lesdits moyens de commande (25, 30 à 40) comportent des moyens de comptage (30) pour, au cours de ladite comparaison bit par bit, compter le nombre de fois qu'une inégalité de bits est constatée, et en ce que lesdits moyens de commande (25, 30 à 40) sont également agencés pour passer d'une comparaison bit par bit sur un nombre limité de bits seulement du mot-code de synchronisation, à une comparaison bit par bit d'un mot-code de synchronisation ultérieur en entier, lorsque le nombre d'inégalités constatées de la comparaison dépasse une valeur prédéterminée.

6. Pager suivant la revendication 5, caractérisé en ce que la capacité desdits moyens de comptage (30) est égale à deux.

7. Pager suivant l'une quelconque des revendications précédentes, caractérisé en ce que lesdits moyens de commande (25, 30 à 40) comportent également des moyens (38) pour mémoriser un mot-code d'adresse caractéristique dudit pager et des moyens (30, 31 39) pour effectuer une comparaison bit par bit sur une partie au moins des bits de ce mot-code d'adresse mémorisé avec les bits correspondants de mots-code d'adresse contenus dans le signal de message entrant et pour actionner lesdits moyens de commutation (3b) de manière qu'ils maintiennent l'alimentation dudit récepteur (3) seulement si ladite comparaison d'adresse indique un nombre d'inégalités de bits inférieur à un nombre prédéterminé.

8. Pager suivant la revendication 7, caractérisé en ce que lesdits moyens de commande (25, 30 à 40) comportent des moyens de comptage (30) pour, au cours de ladite comparaison bit par bit du mot-code d'adresse mémorisé et du mot-code d'adresse contenu dans ledit signal de message, compter le nombre de fois qu'une inégalité de bits est constatée, et en ce que lesdits moyens de commande (25, 30 à 40) sont également agencés pour actionner lesdits moyens de commutation (3b) en fonction du contenu desdits moyens de comptage.

9. Pager suivant l'une quelconque des revendications précédentes, caractérisé en ce que lesdits moyens de mémorisation du mot-code de synchronisation (35) comportent un registre en anneau dans lequel peut circuler ledit mot sous la commande d'un signal d'horloge ayant une fréquence correspondant au débit binaire dudit signal de message.

10. Pager suivant l'une quelconque des revendications 7,8 et 9, caractérisé en ce que lesdits moyens de mémorisation du mot-code d'adresse comportent un registre en anneau (38) dans lequel peut circuler ledit mot sous la commande d'un signal d'horloge ayant une fréquence correspondant au débit binaire dudit signal de message.

11. Pager suivant les revendications 9 et 10 prises ensemble, caractérisé en ce que lesdits registres (35, 38) de mémorisation, respectivement du mot-code de synchronisation et du mot-code d'adresse sont connectés en commun à des moyens de comparaison bit par bit (31) par l'intermédiaire de moyens de commutation (39) destinés à brancher ses registres sélectivement auxdits moyens de comparaison selon que le signal de message présente un mot-code de synchronisation ou un mot-code d'adresse dans la trame de ce signal appartenant audit pager.

12. Ensemble destiné à être porté au poignet d'un utilisateur, caractérisé en ce qu'il comprend un pager suivant l'une quelconque des revendications précédentes, ainsi qu'une pièce d'horlogerie destinée à l'affichage de fonctions horaires.

## Claims

1. Pager intended for receiving radio-broadcast message signals made up from a synchronization code word repeated at regular intervals, address code words and message information code words, said message information comprising one or several messages, the pager comprising :
- a receiver (3) for receiving and demodulating said coded signals,
- a decoder (4) intended for decoding said coded message signals in order to distinguish among said synchronization, address and message information code words and, when it is apparent that said pager is being addressed, extracting the message information intended therefor,
- a memory arrangement (5) connected to said decoder (4) and intended to store said message information,
- means (8, 13) connected to said memory arrangement (5) for processing said message information so as to render it intelligible,
- energization means (16, 16.1, 16.2) for powering said pager,
- switching means (3b) connected between said receiver (3) and said energization means (16, 16.1, 16.2) in order to apply selectively to such receiver the supply voltage furnished by said energization means,
- means (35) for storing said synchronization code word having a plurality of bits each in either a logically high state or a logically low state, and
- control means (25, 30 to 40) for controlling said switching means (3b) so as to apply said voltage to said receiver in order to enable reception of the synchronization code word and to effect a comparison between said stored synchronization code word and the synchronization code word of said message signal, said control means being arranged to cut off said voltage following recognition of the synchronization code word,
characterized in that
- said control means comprise means (25, 30, 31, 32, 35, 39) for effecting said comparison bit-by-bit over at least a portion of the synchronization code word bits exhibiting the greatest number of state changes between successive bits and for actuating said switching means in order to cut said supply voltage furnished to said receiver when the comparison indicates recognition of the synchronization code word through identity of a limited number only of the bits of such word.

2. Pager according to claim 1, characterized in that, for the case in which said message signals assume the POGSAG format, said control means (25, 30 to 40) are arranged to effect said comparison 19 to 24 of the synchronization code word.

3. Pager according to any one of claims 1 or 2, characterized in that said control means (25, 30 to 40) are arranged to control said switching means (3b) in order that they connect said receiver (3) to said energization means (16, 16.1, 16.2) prior to said comparison over a period corresponding to that of a predetermined number of bits of said message signal.

4. Pager according to claim 3, characterized in that said period is that of a number of bits from 1 to 30.

5. Pager according to any one of claims 1 to 4, characterized in that said control means (25, 30 to 40) include counting means (30) for counting the number of times that bit inequality is determined in the course of said bit-by-bit comparison, and in that said control means (25, 30 to 40) are also arranged to pass from a bit-by-bit comparison of a limited number only of bits of said synchronization code word to a bit-by-bit comparison of an entire subsequent synchronization code word when the number of comparison inequalities determined exceeds a predetermined value.

6. Pager according to claim 5, characterized in that the capacity of said counting means (30) is equal to two.

7. Pager according to any one of the preceding claims, characterized in that said control means (25, 30 to 40) also include means (38) for storing an address code word characteristic of said pager and means (30, 31, 39) for effecting a bit-by-bit comparison of at least a portion of the stored address code word bits with the corresponding bits of the address code word contained in the incoming message signal and for actuating said switching means (3b) so that they maintain energization of said receiver (3) only if said address comparison indicates a number of bit inequalities less than a predetermined number.

8. Pager according to claim 7, characterized in that said control means (25, 30 to 40) include counting means (30) for counting the number of times that an inequality of bits is determined in the course of said bit-by-bit comparison of the stored address code word with the address code word contained in said message signal, and in that said control means (25, 30 to 40) are also arranged to actuate said switching means (3b) as a function of the contends of said counting means.

9. Pager according to any one of the preceding claims, characterized in that said means (35) for storing said synchronization code word include a ring register in which said word may circulate under the control of a clock signal having a frequency corresponding to the binary flow rate of said message signal.

10. Pager according to any one of claims 7, 8 and 9, characterized in that said address code word storing means include a ring register (38) in which said word may circulate under the control of a clock signal having a frequency corresponding to the binary flow rate of said message signal.

11. Pager according to claims 9 and 10 together, characterized in that said registers (35, 38) for storing respectively the synchronization code word and address code word are commonly connected to bit-by-bit comparison means (31) through switching means (39) intended to connect such registers selectively to said comparison means according to whether the message signal presents a synchronization code word or an address code word in the frame of such signal pertaining to said pager.

12. Assembly intended to be worn on the wrist of a user, characterized in that it comprises a pager according to any one of the preceding claims, as well as a timepiece intended for the display of horological functions.

## Patentansprüche

1. Rufempfänger, bestimmt zum Empfang von radioübertragenen Nachrichtensignalen, die sich aus einem Synchronsationskennwert, das in regelmäßigen Intervallen wiederholt wird, und Adressen- und Nachrichteninformationskennworten zusammensetzt, wobei die Nachrichteninformation eine oder mehrere Nachrichten umfaßt, der Rufempfänger umfassend:
einen Empfänger (3) zum Empfangen und Demodulieren der codierten Signale,
einen Decodierer (4), bestimmt zum Decodieren der codierten Nachrichtensignale zum Unterscheiden der Synchronisations-, Adressen-und Nachrichteninformationskennworte und, wenn es sich zeigt, daß der Rufempfänger adressiert ist, zum Extrahieren der Nachrichteninformation, die für diesen bestimmt ist,
eine Speichereinrichtung (5), die mit dem Decodierer (4) verbunden und dazu bestimmt ist, die Nachrichteninformation zu speichern,
eine Einrichtung (8, 13), die mit der Speichereinrichtung (5) verbunden ist, um die Nachrichteninformtion zu bearbeiten, um sie verständlich zu machen,
Versorgungsmittel (16, 16.1, 16.2) zur Stromversorgung des Rufempfängers,
Umschaltmittel (3b), die zwischen dem Empfänger (3) und den Versorgungsmitteln (16, 16.1., 16.2) geschaltet sind, um wahlweise die von den Versorgungsmitteln gelieferte Versorgungsspannung an den Empfänger anzulegen,
Mittel (35) zum Speichern des Synchronisationskennworts, das eine Vielzahl von Bits umfaßt, von denen sich jedes entweder in einem hohen oder in einem niedrigen logischen Zustand befindet, und
Steuermittel (25, 30 bis 40) zum Steuern der Umschaltmittel (3b) des Empfängers derart, daß an diesen die Spannung angelegt wird, um den Empfang des Synchronisationskennworts zu ermöglichen und einen Vergleich zwischen dem gespeicherten Synchronisationskennwort und dem Synchronsationskennwort des Nachrichtensignals durchzuführen, wobei die Steuermittel ausgebildet sind, um die Spannung nach Erkennung des Synchronisationskennworts abzutrennen,
dadurch gekennzeichnet, daß
die Steuermittel Mittel (25, 30, 31, 32, 35, 39) umfassen, um den Vergleich Bit pro Bit auf einem Teil wenigstens von Bits des Synchronsationskennworts durchzuführen, das die größte Anzahl von Zustandsänderungen zwischen aufeinanderfolgenden Bits aufweist, und zum Ermöglichen der Betätigung der Umschaltmittel, um die an den Empfänger gelieferte Versorgungsspannung abzuschalten, wenn der Vergleich die Erkennung des Synchronisationskennwortes durch Identität nur einer begrenzten Anzahl von Bits dieses Wortes anzeigt.

2. Rufempfänger nach Anspruch 1, dadurch gekennzeichnet, daß in dem Fall, in dem die Nachrichtensignale sich im Format POGSAG präsentieren, die Steuermittel (25, 30 bis 40) ausgebildet sind, um den Vergleich für die Bits 19 bis 24 des Synchronisationskennworts durchzuführen.

3. Rufempfänger nach einem der Ansprüche 1 oder 2, dadurch gekennzeichnet, daß die Steuermittel (25, 30 bis 40) ausgebildet sind, um die Umschaltmittel (3b) derart zu steuern, daß sie den Empfänger (3) mit den Versorgungsmitteln (16, 16.1, 16.2) vor dem Vergleich während einer Dauer entsprechend derjenigen einer vorbestimmten Bitzahl des Nachrichtensignals verbinden.

4. Rufempfänger nach Anspruch 3, dadurch gekennzeichnet, daß die Dauer diejenige einer Bitzahl, die zwischen 1 und 30 einschließlich liegt, ist.

5. Rufempfänger nach einem der Ansprüche 1 bis 4, dadurch gekennzeichnet, daß die Steuermittel (25, 30 bis 40) Mittel zum Zählen (30) umfassen, um im Verlauf des Vergleichs Bit für Bit die Anzahl von Malen zu zählen, bei denen Bitungleichheit festgestellt wird, und daß die Steuermittel (25, 30 bis 40) auch ausgebildet sind, um einen Vergleich Bit für Bit einer begrenzten Anzahl von Bits nur des Synchronisationskennwortes zu einem Vergleich Bit für Bit eines späteren Snychronisationskennwortes als Ganzem zuzuführen, wenn die Anzahl von festgestellten Ungleichheiten des Vergleichs einen vorbestimmten Wert überschreitet.

6. Rufempfänger nach Anspruch 5, dadurch gekennzeichnet, daß die Kapazität der Zählmittel (30) gleich zwei ist.

7. Rufempfänger nach einem der vorhergehenden Ansprüche, dadurch gekennzeichnet, daß die Steuermittel (25, 30 bis 40) ebenfalls Mittel (38) zum Speichern eines charakteristischen Adressenkennworts des Rufempfängers und Mittel (30, 31, 39) zum Durchführen eines Vergleichs Bit für Bit auf einem Teil wenigstens von Bits dieses gespeicherten Adressenkennworts mit den entsprechenden Bits des in dem eingehenden Nachrichtensignal enthaltenen Adressenkennworts und zum Betätigen der Umschaltmittel (3b) derart, daß sie die Versorgung des Empfängers (3) nur aufrechterhalten, wenn der Adressenvergleich eine Anzahl von Ungleichheiten von Bits unterhalb einer vorbestimmten Zahl anzeigt, umfassen.

8. Rufempfänger nach Anspruch 7, dadurch gekennzeichnet, daß die Steuermittel (25, 30 bis 40) Zählmittel (30) umfassen, um im Verlauf des Vergleichs Bit für Bit des gespeicherten Adressenkennworts und des in dem Nachrichtensignal enthaltenen Adressenkennworts die Zahl von Malen zu zählen, bei denen eine Ungleichheit von Bits festgestellt wird, und daß die Steuermittel (25, 30 bis 40) gleichzeitig ausgebildet sind, um die Umschaltmittel (3b) in Abhängigkeit vom Inhalt in den Zählmitteln zu betätigen.

9. Rufempfänger nach einem der vorhergehenden Ansprüche, dadurch gekennzeichnet, daß die Mittel zum Speichern des Synchronisationskennworts (35) ein Ringregister umfassen, in dem das Wort unter der Steuerung eines Taktsignals zirkulieren kann, das einer Frequenz entsprechend der Binärleistung des Nachrichtensignals entspricht.

10. Rufempfänger nach einem der Ansprüche 7, 8 und 9, dadurch gekennzeichnet, daß die Speichermittel für das Adressenkennwort ein Ringregister (38) umfassen, in dem das Wort unter der Steuerung eines Taktsignals zirkulieren kann, das eine Frequenz entsprechend der Binärleistung des Nachrichtensignals besitzt.

11. Rufempfänger nach den Ansprüchen 9 und 10 zusammen, dadurch gekennzeichnet, daß die Register (35, 38) zum Speichern des Synchronisationskennworts bzw. des Adressenkennworts gemeinsam mit Mitteln zum Vergleich Bit für Bit (31) über Umschaltmittel (39) verbunden sind, die dazu bestimmt sind, diese Register wahlweise mit den Mitteln zum Vergleichen entsprechend demgemäß zu verbinden, ob das Nachrichtensignal ein Synchronisationskennwort oder ein Adressenkennwort im Raster dieses am Rufempfänger erscheinenden Signals aufweist.

12. Einheit, bestimmt zum Tragen am Handgelenk eines Benutzers, dadurch gekennzeichnet, daß sie einen Rufempfänger nach einem der vorhergehenden Ansprüche ebenso wie eine Uhr zur Anzeige von Stundenfunktionen umfaßt.
